# EUROPEAN PATENT SPECIFICATION

(11) **EP 4 333 168 B1**
(45) Date of publication and mention of the grant of the patent: **24.12.2025**
(21) Application number: 22848655.1
(22) Date of filing: 29.07.2022
(51) Int. Cl.: H01M 50/153, H01M 50/533, H01M 50/109

(54) **BATTERY AND ELECTRONIC PRODUCT**
BATTERIE UND ELEKTRONISCHES PRODUKT
BATTERIE ET PRODUIT ÉLECTRONIQUE

(30) Priority: 30.07.2021 CN 202121778184 U
(43) Date of publication of application: 06.03.2024
(60) Divisional application: 25213191.7
(73) Proprietor: Zhuhai CosMX Battery Co., Ltd., Zhuhai, Guangdong 519180 (CN)
(72) Inventor: WANG, Zhifeng, Zhuhai, Guangdong 519180 (CN); PENG, Ning, Zhuhai, Guangdong 519180 (CN)
(74) Representative: PPR AG
(86) International application number: PCT/CN2022/108782
(87) International publication number: WO 2023/006050

(56) References cited:
- WO-A1-2021/033943
- CN-A- 106 654 077
- CN-A- 111 430 588
- CN-A- 112 290 131
- CN-A- 112 290 131
- CN-A- 112 993 452
- CN-A- 113 131 049
- CN-U- 213 520 130
- CN-U- 213 716 968
- CN-U- 215 342 693
- CN-U- 215 644 579
- CN-U- 215 988 886
- CN-U- 216 120 498
- JP-A- 2020 095 904

## Description

### TECHNICAL FIELD

The present application relates to the technical field of batteries, in particular, to a battery and an electronic product.

### BACKGROUND

With the development of lithium-ion battery technology, especially the appearance of button batteries with the advantages of high safety and high energy density, it brings great convenience to the power supply of electronic products. Button batteries are widely used in all aspects of life, especially in computer motherboards, wearable devices, calculators, electronic scales, toys and other electronic products. The demand for button batteries is increasing, and the quality improvement of button batteries has become a hot topic for research.

At present, a button battery generally includes a housing and a cover assembly, where the housing is used for holding a cell body and an electrolyte solution, and the cover assembly is welded on the housing. In the structure of the button battery, a positive tab of the cell body needs to be electrically connected with a conductive part in the cover assembly, and the conductive part is usually used as a positive electrode of the battery to supply power to the outside. However, due to the limitations of the existing battery structures, the welding flatness and the welding reliability of the tab on the conductive part are affected, thereby adversely affecting the welding effect of the tab.

Prior art document CN113131049 discloses a battery shell and a battery. The battery shell is divided into a bottom shell and a sealing cover, and the sealing cover is divided into an outer contact layer, an insulating layer and an inner contact layer. An electrode connecting part of the inner contact layer is electrically conducted with one electrode of a battery cell, and the other electrode of the battery cell is electrically conducted with the bottom shell. The battery cell can be packaged after the outer contact layer is welded to the bottom shell. The inner contact layer and the outer contact layer are insulated through the insulating layer, so that the bottom shell is also insulated from the inner contact layer, and the two electrodes of the battery cell can be prevented from being mutually conducted to cause short circuit. The inner contact layer and the outer contact layer of the sealing cover are insulated in advance, so that when the sealing cover is used for packaging the bottom shell, only the outer contact layer and the bottom shell need to be welded. An insulating film does not need to be arranged, the packaging process of the battery can be simplified, and the packaging efficiency is improved.

### SUMMARY

The present invention is defined in the appended set of claims. The present application provides a battery and an electronic product for at least improving the flatness and reliability of welding a tab on a conductive part.

In order to achieve the above objective, the present application provides a battery, including:
a housing including a bottom wall and a sidewall, where a lower end of the sidewall is connected to an edge of the bottom wall, and the bottom wall and the sidewall enclose to form a holding cavity;
a cover assembly disposed on the housing, where the cover assembly includes a conductive part and a top cover, the top cover is in insulated connection with the conductive part, the conductive part includes a flattening portion and a boss portion, the boss portion is connected to the flattening portion, a center of the top cover is provided with a through hole, and the boss portion extends into the through hole;
a cell body accommodated in the holding cavity, where the cell body is connected to a first tab and a second tab, the first tab is connected to the conductive part, and the second tab is connected to the housing.

According to the battery provided by the present application, the top cover is in insulated connection with the conductive part, the center of the top cover is provided with the through hole, the boss portion of the conductive part extends upwards into the through hole of the top cover, and the boss portion is used as a positive electrode end of the battery. Since the conductive part has a larger lower surface for welding the first tab, the welding area is increased, thereby facilitating the welding operation of the first tab and the conductive part. Therefore, it is not easy to generate a cold joint, and the welding can be ensured stable, thereby improving the flatness and reliability of the welding connection of the first tab and the conductive part, and improving the quality of the battery and the yield of the battery.

In one possible implementation, one surface of the top cover facing away from the conductive part is a first surface, one surface of the top cover facing the conductive part is a second surface, an edge of the second surface is provided with a step, and the step is recessed from the second surface to the first surface; an upper end of the sidewall is provided with an opening, and a top wall of the step abuts against the upper end of the sidewall.

In one possible implementation, the step encircles the edge of the second surface; the step is recessed from the second surface to the first surface at a depth H1 in a range of 0.05 mm to 0.15 mm; and/or
a distance D between an inner wall of the step and an edge of the first surface ranges from 0.1 mm to 0.2 mm.

In one possible implementation, a thickness T of the cover ranges from 0.1 mm to 0.2 mm; and/or a diameter of the flattening portion is smaller than a diameter of the second surface of the top cover.

In one possible implementation, an inner diameter of the through hole is larger than a diameter of the boss portion, and the inner diameter of the through hole is smaller than a diameter of the flattening portion.

In one possible implementation, a top end of the boss portion is flush with the first surface; or the top end of the boss portion is lower than the first surface.

In one possible implementation, the first tab is connected to the flattening portion, and the second tab is connected to the bottom wall of the housing.

In one possible implementation, the first tab is connected to the flattening portion by laser welding, and a welding spot for laser welding is located at a center of the flattening portion;
one end of the first tab close to an edge of the conductive part is provided with a limiting edge, and a distance H2 between the limiting edge and the edge of the conductive part is smaller than a distance H3 between the limiting edge and a center of the welding spot used for laser welding.

According to the invention, the bottom wall is provided with a liquid injection hole communicating with the holding cavity, a lower end of the bottom wall is further provided with a sealing piece, and the sealing piece is in sealed connection with the liquid injection hole.

In one possible implementation, the top cover is a stainless steel top cover; the top cover is plated with a nickel layer having a thickness of 0.5 µm to 5 µm; and/or the top cover is in insulated connection with the conductive part through an insulating part.

The present application further provides an electronic product including the above battery.

According to the battery provided by the present application, the conductive part and the top cover have simple structure, and a liquid injection hole is not required to be formed in the conductive part, so that the molding process of the conductive part and the top cover is simplified, the equipment for processing the conductive part and the top cover is simplified, and a sealing nail is not required to be welded on the cover assembly, thereby reducing the processing difficulty and the production cost, improving the yield of battery production and ensuring the stability of battery during operation.

According to the battery provided by the present application, the step is disposed to encircle the edge of the second surface, so that the inner wall of the step is abutted against the inner wall surface of the sidewall, this is convenient to realize the sealed connection between the top cover and the housing through welding.

According to the battery provided by the present application, through providing the step, the energy required for the laser welding connection between the top cover and the housing can be effectively reduced, the influence of the laser welding on the cell body can be reduced, thereby improving the quality of the battery.

According to the battery provided by the present application, the inner diameter of the through hole is larger than the diameter of the boss portion, so that the boss portion can conveniently pass through the through hole; and the inner diameter of the through hole is smaller than the diameter of the flattening portion, so that the flattening portion can be prevented from falling upward out of the through hole, thereby ensuring convenient installation and stable use of the cover assembly.

According to the battery provided by the present application, the liquid injection hole is formed in the bottom wall of the housing, so that compared with the prior art in which the liquid injection hole is formed in the top cover, the processing technology of the top cover can be simplified; and the sealing piece is sealed at the lower end of the liquid injection hole, so that the leakage of electrolyte can be prevented, and the sealing effect can be ensured.

In addition to the technical problems solved by embodiments of the present application, the technical features constituting the technical solutions, and the beneficial effects brought by the technical features of these technical solutions as described above, other technical problems that can be solved by the battery and electronic product provided by embodiments of the present application, other technical features contained in the technical solutions, and the beneficial effects brought by these technical features, will be further described in detail in the description of embodiments.

### BRIEF DESCRIPTION OF DRAWINGS

To describe the technical solutions in embodiments of the present application or in the prior art more clearly, the following briefly introduces the accompanying drawings needed for describing the embodiments or the prior art. Apparently, the accompanying drawings in the following description illustrate merely some embodiments of the present application, and persons of ordinary skill in the art may still derive other drawings from these accompanying drawings without creative effort.
FIG 1 is a perspective view of an existing battery;
FIG 2 is a perspective view of a battery provided by an embodiment of the present application;
FIG 3 is a sectional view of a battery provided by an embodiment of the present application;
FIG 4 is a perspective view of a cover assembly of a battery provided by an embodiment of the present application;
FIG 5 is a half sectional view of a cover assembly of a battery provided by an embodiment of the present application;
FIG 6 is another perspective view of a cover assembly of a battery provided by an embodiment of the present application;
FIG 7 is a half sectional view of a top cover of a battery provided by an embodiment of the present application;
FIG 8 is an enlarged view of a partial structure at A in FIG 5 of a battery provided by an embodiment of the present application;
FIG 9 is a schematic structural diagram of a first tab welded on a cover assembly of a battery provided by an embodiment of the present application.

Description of reference numerals:
10-housing;
11-holding cavity;
12-bottom wall;
121-liquid injection hole;
13-sidewall;
131-opening;
14-sealing piece;
20-cell body;
30-cover assembly;
31-conductive part;
311-flattening portion;
312-boss portion;
32-top cover;
321-through hole;
322-steps;
3221-first step wall;
3222-second step wall;
323-first surface;
324-second surface;
33-insulating part;
40-first tab;
41-limiting edge;
50-second tab;
60-welding spot;
70-sealing nail;
80-housing cover.

### DESCRIPTION OF EMBODIMENTS

To make the objectives, technical solutions, and advantages of embodiments of the present application clearer, the following clearly and comprehensively describes the technical solutions in embodiments of the present application with reference to the accompanying drawings in embodiments of the present application. Apparently, the described embodiments are merely a part rather than all embodiments of the present application. All other embodiments obtained by persons of ordinary skill in the art based on embodiments of the present application without creative effort shall fall within the protection scope of the present application.

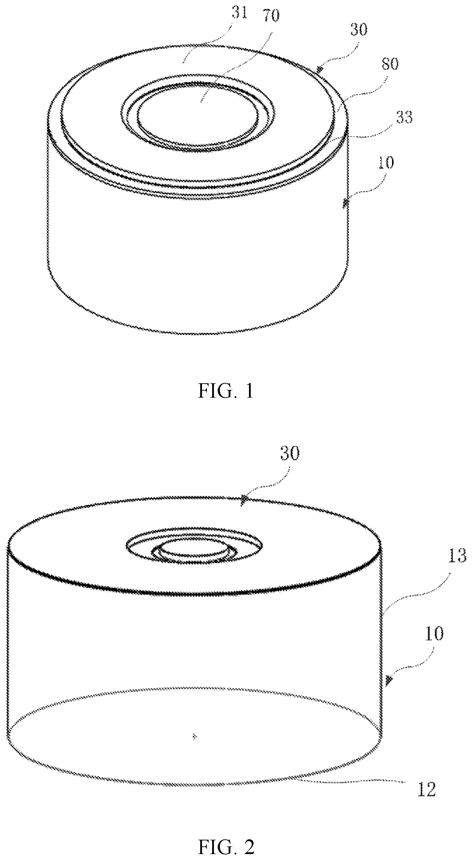

Referring to FIG 1, in a related battery structure, a cell body is accommodated in a housing 10. A cover assembly 30 includes a housing cover 80, a conductive part 31 and an insulating part 33. The housing cover 80 is welded on the housing 10. The conductive part 31 is in insulated connection with the housing cover 80 through the insulating part 33. A through hole is formed in the center of the housing cover 80. A lower end of the conductive part 31 is provided with a protruding portion, and the protruding portion extends downwards from the through hole formed in a center of the housing cover 80 to be flush with a lower surface of the housing cover 80. A first tab connected with the cell body is connected with the protruding portion of the conductive part 31 by welding, and a second tab connected with the cell body is connected with a bottom wall of the housing 10 by welding. In this battery structure, because the lower surface area of the protruding portion protruding downwards is small, the operation of welding the first tab on the protruding portion is inconvenient, and problems such as cold joint are likely to occur, which affects the connection strength between the first tab and the conductive part 31, affects the welding flatness of the first tab, affects the quality of the battery, and is not conducive to the improvement of the yield of the battery.

In addition, in this battery structure, the cover assembly 30 needs to be processed to form a liquid injection hole, so that the structure of the conductive part 31 and the housing cover 80 is complicated, thereby increasing the difficulty of the manufacturing process of battery. In addition, the housing cover 80 and a sealing nail 70 are usually made of aluminum, so that it is difficult to achieve good welding of the sealing nail 70, which affects the yield of battery.

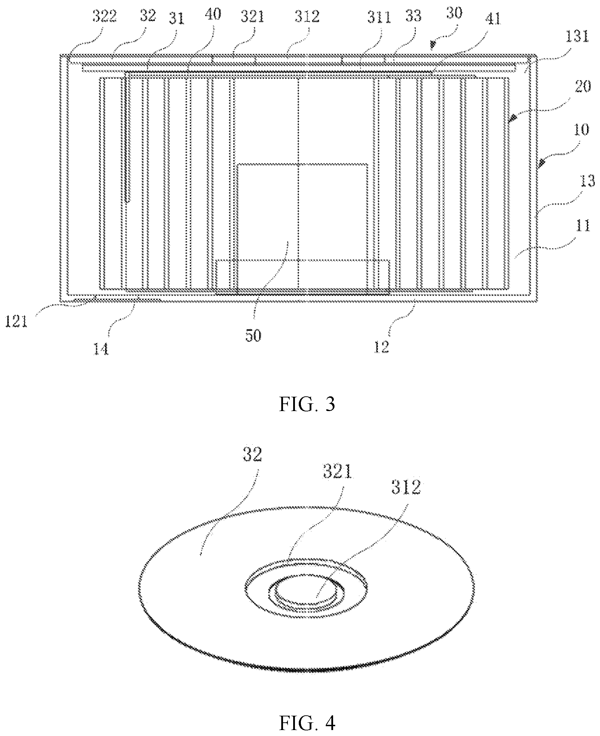

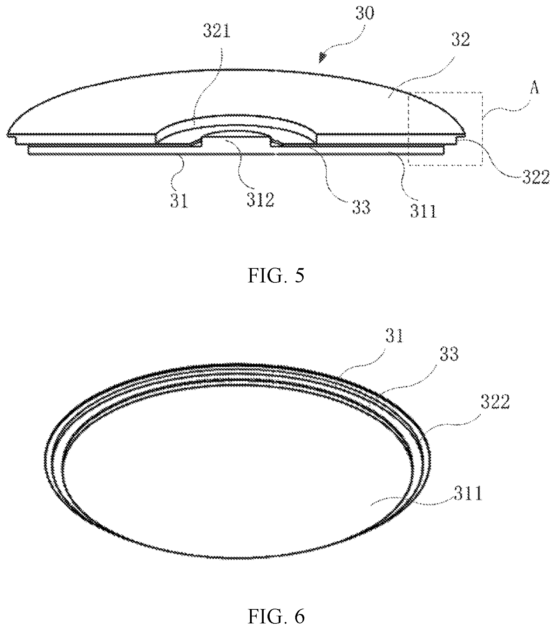

In view of the above background, as shown in FIG 2 and FIG 3, the present application improves the structure of the battery, and specifically improves the structure of the cover assembly 30. The cover assembly 30 includes a conductive part 31 and a top cover 32, where the conductive part 31 includes a flattening portion 311 and a boss portion 312, and the boss portion 312 is connected to the flattening portion 311. As shown in FIG 4 and FIG 5, the top cover 32 is in insulated connection with the conductive part 31, a center of the top cover 32 is provided with a through hole 321, and the boss portion 312 extends upward through the through hole 321 to be flush with an upper surface of the top cover 32, so that the entire lower surface of the flattening portion 311 connected with the boss portion 312 can be used for welding the first tab, which can increase the welding area and facilitate the welding operation of the first tab on the flattening portion 311, so that the welding reliability is ensured, the welding flatness and the welding reliability of the first tab are improved, and the quality of the battery is improved.

In addition, such a structure does not need to process a liquid injection hole in the cover assembly 30, and does not need to weld a sealing nail on the cover assembly 30, which can effectively reduce the processing difficulty of the cover assembly 30, thereby improving the yield of the battery.

A battery and an electronic product provided by embodiments of the present application are described below with reference to the accompanying drawings.

As shown in FIG 2 and FIG 3, a battery provided by the present application includes a housing 10, a cover assembly 30 disposed on the housing 10, and a cell body 20 disposed inside the housing 10, where a first tab 40 and a second tab 50 are connected to the cell body 20, and the second tab 50 is connected to the housing 10. The cover assembly 30 includes a conductive part 31 and a top cover 32, where the top cover 32 is in insulated connection with the conductive part 31, the first tab 40 is connected to the conductive part 31. The conductive part 31 includes a flattening portion 311 and a boss portion 312, and the boss portion 312 is connected to the flattening portion 311. A through hole 321 is formed in a center of the top cover 32, and the boss portion 312 extends into the through hole 321.

According to the battery provided by the embodiment, since the flattening portion 311 connected with the boss portion 312 is used for welding the first tab 40, the larger lower surface of the flattening portion 311 can increase the welding area, thereby facilitating the welding operation of the first tab 40 and the conductive part 31. Therefore the occurrence of cold joint is reduced, and the welding strength is ensured, thereby improving the welding flatness and the welding firmness of the first tab 40, and thereby improving the quality of the battery.

According to the battery provided by the embodiment, the conductive part 31 and the top cover 32 have simple structure, and a liquid injection hole is not required to be formed in the conductive part 31, so that the molding process of the conductive part 31 and the top cover 32 is simplified, the equipment for processing the conductive part 31 and the top cover 32 is simplified, the production cost can be saved, and the yield of the battery can be improved. In addition, according to the battery provided by the embodiment, as shown in FIG. 3 and FIG. 4, since the boss portion 312 of the conductive part 31 extends into the through hole 321, the boss portion 312 serves as the positive electrode of the battery, so that a good insulating effect is achieved by setting the insulating part 33, ensuring the stable operation of the battery.

As shown in FIG 4 and FIG 5, the insulating part 33 may be an adhesive layer formed after an insulating adhesive is solidified, for example, the insulating adhesive may be PP adhesive. The top cover 32 may be in insulated connection with the conductive part 31 through the PP adhesive by heating and pressurizing, which is conducive to improving the bonding performance of sealed connection of the insulating adhesive, ensuring that the connection between the conductive part 31 and the top cover 32 is tight and not easy to loosen.

In one possible implementation, the conductive part 31 is circular, the top cover 32 is ring-shaped, and the boss portion 312 of the conductive part 31 is provided coaxially with the top cover 32. Since the top cover 32 is ring-shaped, the insulating part 33 is also ring-shaped, ensuring that the top cover 32 is connected to the conductive part 31 in all directions.

In one possible implementation, as shown in FIG 5 and FIG 6, the boss portion 312 may be integrally molded with the flattening portion 311, and the boss portion 312 is a solid structure protruding from an upper surface of the flattening portion 311, and the lower surface of the flattening portion 311 is a plane.

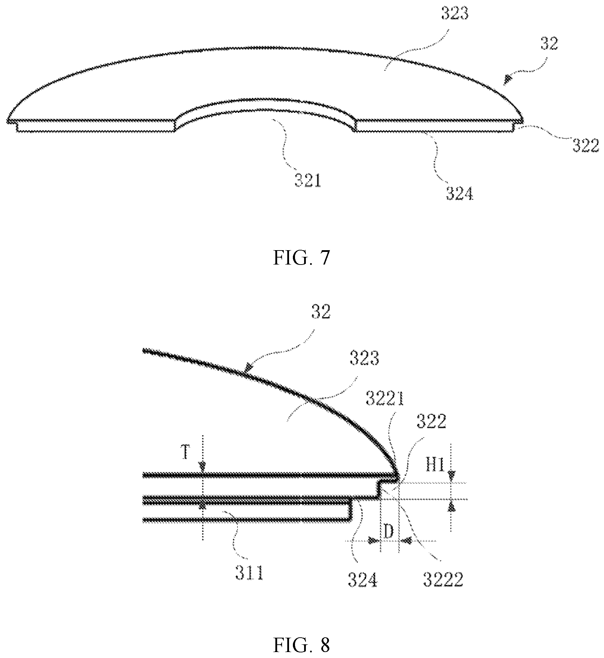

As shown in FIG. 5 and FIG. 7, one surface of the top cover 32 facing away from the conductive part 31 is a first surface 323, and one surface of the top cover 32 facing the conductive part 31 is a second surface 324. As shown in FIG. 2 and FIG. 8, in order to conveniently dispose the cover assembly 30 on the housing 10, an edge of the second surface 324 is provided with a step 322. The step 322 is recessed from the second surface 324 toward the first surface 323. Through providing the step 322, the energy required for the laser welding connection between the top cover 32 and the housing 10 can be reduced, and the influence of the laser welding on the cell body 20 can be reduced, thereby improving the quality of the battery.

Referring to FIG. 2, the housing 10 includes a bottom wall 12 and a sidewall 13. A lower end of the sidewall 13 is connected to an edge of the bottom wall 12. The bottom wall 12 and the sidewall 13 enclose to form a holding cavity 11. An upper end of the sidewall 13 has an opening 131. A top wall of the step 322 abuts against the upper end of the sidewall 13. The step 322 of the top cover 32 is in sealed connection with the sidewall 13 by welding.

The step 322 encircles an edge of the second surface 324, the step 322 is recessed from the second surface 324 to the first surface 323 at a depth H1 in a range of 0.05 mm to 0.15 mm, and/or a distance D between an inner wall of the step 322 and an edge of the first surface 323 ranges from 0.1 mm to 0.2 mm. That is, the distance D between the edge of the second surface 324 and the edge of the first surface 323 ranges from 0.1 mm to 0.2 mm. In this way, the inner wall of the step 322 abuts against an inner wall surface of the sidewall 13, and it is convenient to realize the sealed connection between the top cover 32 and the housing 10 through welding.

Referring to FIG. 3 and FIG. 8, the top wall of the step 322 is a first step wall 3221, the inner wall of the step 322 is a second step wall 3222, the second step wall 3222 abuts against the inner wall surface of the sidewall 13, and the first step wall 3221 of the step 322 abuts against the upper end of the sidewall 13 of the housing 10.

In one possible implementation, referring to FIG. 8, the distance D between the inner wall of the step 322 and the edge of the first surface 323 is 0.1 mm, 0.15 mm or 0.2 mm, and the depth H1 at which the step 322 is recessed from the second surface 324 to the first surface 323 is 0.05 mm, 0.10 mm or 0.15 mm, so that the step 322 abuts against the upper end of the sidewall 13 of the housing 10.

The provision of the step 322 can achieve the thinning of the edge of the second surface 324. When the cover assembly 30 is welded to the housing 10, the energy consumption required for welding can be reduced, which is conductive to the smooth welding, and the influence of the welding on the cell body 20 accommodated in the housing 10 can be reduced, thereby improving the quality of the battery.

Referring to FIG. 2, the sidewall 13 is ring-shaped, and the lower end of the sidewall 13 is integrally molded with the bottom wall 12.

Referring to FIG 2 and FIG 8, in order to ensure that when the cover assembly 30 is welded to the housing 10, the flattening portion 311 does not protrude out of the step 322 of the top cover 32 to affect the step 322 from abutting against the upper end of the sidewall 13, the diameter of the flattening portion 311 is smaller than the diameter of the second surface 324 of the top cover 32.

In one possible implementation, referring to FIG. 4 and FIG. 5, the through hole 321 is circular. It can be easily understood that the inner diameter of the through hole 321 is larger than the diameter of the boss portion 312, and the inner diameter of the through hole 321 is smaller than the diameter of the flattening portion 311. With such a structure, the boss portion 312 can conveniently pass through the through hole 321, and the flattening portion 311 can be prevented from falling upward out of the through hole 321, thereby ensuring convenient installation and stable use of the cover assembly 30.

In one possible implementation, a top end of the boss portion 312 is flush with the first surface 323, or in another possible implementation, the top end of the boss portion 312 is lower than the first surface 323. Such a structure can effectively avoid increasing the overall height of the battery, so that the battery is more compact, thereby being conductive to improving the energy density of the battery.

Referring to FIG. 8, the thickness T of the top cover 32 has a value in a range of 0.1 mm to 0.2 mm. In one possible implementation, the thickness T of the top cover 32 may be 0.1 mm, 0.15 mm or 0.2 mm.

It can be easily understood that the thickness T of the top cover 32 is greater than the depth H1 at which the step 322 is recessed from the second surface 324 to the first surface 323. For example, the thickness T of the top cover 32 is 0.2 mm, and the depth H1 at which the step 322 is recessed from the second surface 324 to the first surface 323 is 0.15 mm.

In one possible implementation, the conductive part 31 is a metallic aluminum conductive part.

In one possible implementation, the top cover 32 is a stainless steel top cover; the top cover 32 is plated with a nickel layer having a thickness of 0.5 µm to 5 µm. In one possible implementation, the nickel layer has a thickness of 0.5 µm, 1 µm, 4 µm or 5 µm. The electroplating of the nickel layer to the top cover 32 facilitates the insulation connection of the top cover 32 to the conductive part 31, especially facilitates the insulation connection of the top cover 32 to the conductive part 31 through the PP adhesive.

In one possible implementation, the thickness of the nickel layer is 2 µm to 3 µm. For example, the thickness of the nickel layer is 2 µm, 2.5 µm or 3 µm.

Referring to FIG 3, a cell body 20 is disposed in the holding cavity 11, a first tab 40 and a second tab 50 are electrically connected to the cell body 20, the first tab 40 is connected to the flattening portion 311, and the second tab 50 is connected to the bottom wall 12 of the housing 10. The connection of the first tab 40 and the flattening portion 311 realizes the conduction between the first tab 40 and the flattening portion 311, and the connection of the second tab 50 and the bottom wall 12 of the housing 10 realizes the conduction between the second tab 50 and the bottom wall 12 of the housing 10. One of the first tab 40 and the second tab 50 is a positive tab, and the other is a negative tab.

In one possible implementation, the cell body 20 includes a plurality of positive plates and a plurality of negative plates which are alternately stacked, the positive plates are spaced from the negative plates, and a separator is provided between the positive plates and the negative plates to space the positive plates and the negative plates so as to prevent the positive plates and the negative plates from contacting to cause short circuit. In addition, the separator further has a function of allowing electrolyte ions in the electrolyte solution to pass through.

In one possible implementation, the first tab 40 is a positive tab, and the second tab 50 is a negative tab. A positive plate is connected to the positive tab, and a negative plate is connected to the negative tab. The first tab 40 is connected to the flattening portion 311 by laser welding, so that the boss portion 312 of the conductive part 31 serves as the positive electrode of the battery provided by the embodiment. The second tab 50 is connected to the bottom wall 12 of the housing 10 by laser welding or resistance welding, so that the bottom wall 12 of the housing 10 serves as the negative electrode of the battery provided by the embodiment.

The conductive part 31 may be made of a metal material or other materials. The electric energy generated by the cell body 20 is output to the outside through the housing 10 and the conductive part 31 so as to provide electric energy for an external electric device. Or, when the battery is a rechargeable battery and an external charging device charges the battery, the electric energy is transmitted to the cell body 20 through the housing 10 and the conductive part 31 for charging.

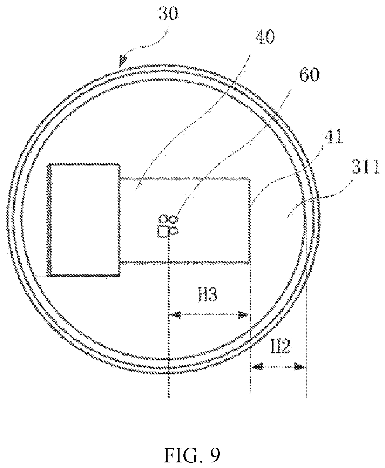

In one possible implementation, referring to FIG 2 and FIG 9, the first tab 40 is connected to the flattening portion 311 by laser welding so as to achieve the conduction of the first tab 40 to the flattening portion 311, and a welding spot 60 for laser welding is located at the center of the flattening portion 311.

One end of the first tab 40 is connected to the cell body 20, and the other end of the first tab 40 extends to the outside of the cell body 20, and the first tab 40 extending to the outside of the cell body 20 is covered with a tab adhesive. In particular, a portion of the first tab 40 that is connected to the flattening portion 311 by laser welding is not covered with the tab adhesive.

Referring to FIG. 2 and FIG. 9, one end of the first tab 40 close to an edge of the conductive part 31 has a limiting edge 41, and a distance H2 between the limiting edge 41 and the edge of the conductive part 31 is smaller than a distance H3 between the limiting edge 41 and the center of the welding point 60 used for the laser welding. This help to improve the stability of the welding of the conductive part 31.

The bottom wall 12 is provided with a liquid injection hole 121 communicated with the holding cavity 11, and a lower end of the bottom wall 12 is further provided with a sealing piece 14 which is in sealed connection with the liquid injection hole 121.

The liquid injection hole 121 is used for injecting an electrolyte solution into the holding cavity 11, and the sealing piece 14 abuts against the liquid injection hole 121 to seal the liquid injection hole 121, so as to improve the safety of the battery.

In one possible implementation, the sealing piece 14 may be a thin sheet, the sealing piece 14 may be embedded in the bottom wall 12, the sealing piece 14 is connected to the bottom wall 12 by welding, and the sealing piece14 blocks one end of the liquid injection hole 121 to prevent the electrolyte solution from leaking outward from the liquid injection hole 121.

In another possible implementation, the sealing piece 14 is provided with a blocking plug adapted to the liquid injection hole 121. For example, the liquid injection hole 121 is a circular hole, the blocking plug is a cylindrical plug, the blocking plug can be inserted into the liquid injection hole 121 to block the liquid injection hole 121, and the sealing piece 14 blocks a lower end surface of the liquid injection hole 121. In this example, the electrolyte solution can be prevent from leaking by the blocking of the blocking plug in the liquid injection hole 121 and the blocking of the sealing piece 14 at the lower end surface of the liquid injection hole 121, thereby achieving the sealing effect.

The sealing piece 14 may be embedded within the bottom wall 12, and a lower surface of the sealing piece 14 is flush with the lower surface of the bottom wall 12, so as to prevent the lower end of the sealing piece 14 from protruding to take up the installation space for the battery.

After the electrolyte solution is completely injected into the holding cavity 11 from the liquid injection hole 121, a joint position between the sealing piece 14 and the liquid injection hole 121 can be welded to improve the sealing effect.

According to the battery provided by the embodiment, the liquid injection hole 121 is formed in the bottom wall 12, so that compared with the prior art in which the liquid injection hole 121 is formed in the top cover 32, the processing technology of the top cover 32 can be simplified, the production cost of the battery can be saved, and the beauty of the battery can be improved.

In one possible implementation, the battery provided by the embodiment is a button battery.

The present application further provides an electronic product including the above battery. The battery is connected and conducted with a positive electrode of the electronic product through the boss portion 312 of the conductive part 31, and is connected and conducted with a negative electrode of the electronic product through the housing 10, so as to supply power to the electronic product.

The electronic product provided by the present application includes, but is not limited to, a computer motherboard, an electronic watch, an electronic dictionary, an electronic scale, a remote controller, an electric toy, a cardiac pacemaker, an electronic hearing aid, a counter, a camera, and the like including the above battery.

In the present application, unless otherwise clearly specified and defined, the terms "mounted to", "connected to", "coupled to", "fixed to" and the like should be understood broadly. For example, the connection can be a fixed connection, a detachable connection, or an integral connection; the connection can be a mechanical connection, an electrical connection or communication with each other; the connection can be a direct connection, or an indirect connection through an intermediary, an interconnection between two components or an interactive relationship between two components. For those of ordinary skill in the art, the specific meanings of the above terms in the present application can be understood through specific situations.

Finally, it should be noted that the above embodiments are only used to illustrate the technical solutions of the present application, not to limit them. Although the present application has been described in detail with reference to the foregoing embodiments, those of ordinary skill in the art should understand that the technical solutions described in the foregoing embodiments can still be modified, or some or all of the technical features thereof can be equivalently replaced; and these modifications or replacements do not make the essence of the corresponding technical solutions deviate from the scope of the technical solutions of the embodiments of the present application that is defined by the appended claims.

## Claims

1. A battery, comprising:
a housing (10) comprising a bottom wall (12) and a sidewall (13), wherein a lower end of the sidewall (13) is connected to an edge of the bottom wall (12), and the bottom wall (12) and the sidewall (13) enclose to form a holding cavity (11);
a cover assembly (30) disposed on the housing (10), wherein the cover assembly (30) comprises a conductive part (31) and a top cover (32), the top cover (32) is in insulated connection with the conductive part (31), the conductive part (31) comprises a flattening portion (311) and a boss portion (312), the boss portion (312) is connected to the flattening portion (311), a center of the top cover (32) is provided with a through hole (321), and the boss portion (312) extends into the through hole (321);
a cell body (20) accommodated in the holding cavity (11), wherein the cell body (20) is connected to a first tab (40) and a second tab (50), the first tab (40) is connected to the conductive part (31), and the second tab (50) is connected to the housing (10);
wherein a sealed connection between the top cover (32) and the housing (10) is realized through welding;
wherein the first tab (40) is connected to the flattening portion (311) by laser welding, and a welding spot (60) for laser welding is located at a center of the flattening portion (311);
**characterized in that**
the bottom wall (12) is provided with a liquid injection hole (121) communicating with the holding cavity (11), a lower end of the bottom wall (12) is further provided with a sealing piece (14), and the sealing piece (14) is in sealed connection with the liquid injection hole (121).

2. The battery according to claim 1, wherein one surface of the top cover (32) facing away from the conductive part (31) is a first surface (323), one surface of the top cover (32) facing the conductive part (31) is a second surface (324), an edge of the second surface (324) is provided with a step (322), and the step (322) is recessed from the second surface (324) to the first surface (323); an upper end of the sidewall (13) is provided with an opening (131), and a top wall of the step (322) abuts against the upper end of the sidewall (13).

3. The battery according to claim 2, wherein the step (322) encircles the edge of the second surface (324); the step (322) is recessed from the second surface (324) to the first surface (323) at a depth H1 in a range of 0.05 mm to 0.15 mm; and/or
a distance D between an inner wall of the step (322) and an edge of the first surface (323) ranges from 0.1 mm to 0.2 mm.

4. The battery according to claim 3, wherein a thickness T of the cover (32) ranges from 0.1 mm to 0.2 mm; and/or
a diameter of the flattening portion (311) is smaller than a diameter of the second surface (324) of the top cover (32).

5. The battery according to any one of claims 1-4, wherein an inner diameter of the through hole (321) is larger than a diameter of the boss portion (312), and the inner diameter of the through hole (321) is smaller than a diameter of the flattening portion (311).

6. The battery according to any one of claims 2-4, wherein a top end of the boss portion (312) is flush with the first surface (323); or the top end of the boss portion (312) is lower than the first surface (323).

7. The battery according to any one of claims 1-4, wherein the first tab (40) is connected to the flattening portion (311), and the second tab (50) is connected to the bottom wall (12) of the housing (10).

8. The battery according to any one of claims 1-4, wherein one end of the first tab (40) is connected to the cell body (20), and the other end of the first tab (40) extends to the outside of the cell body (20); the end of the first tab (40) extending to the outside of the cell body (20) is provided with a limiting edge (41), and the limiting edge (41) is closest to an edge of the conductive part (31); a distance H2 between the limiting edge (41) and the edge of the conductive part (31) is smaller than a distance H3 between the limiting edge (41) and a center of the welding spot (60) used for laser welding.

9. The battery according to any one of claims 1-4, wherein the top cover (32) is a stainless steel top cover; the top cover (32) is plated with a nickel layer having a thickness of 0.5 µm to 5 µm; and/or
the top cover (32) is in insulated connection with the conductive part (31) through an insulating part (33).

10. An electronic product, comprising the battery according to any one of claims 1-9.

## Patentansprüche

1. Batterie, umfassend:
ein Gehäuse (10), umfassend eine Bodenwand (12) und eine Seitenwand (13), wobei ein unteres Ende der Seitenwand (13) mit einer Kante der Bodenwand (12) verbunden ist und die Bodenwand (12) und die Seitenwand (13) umschließen, um eine haltende Ausnehmung (11) zu bilden;
eine Abdeckgruppe (30), die auf dem Gehäuse (10) angeordnet ist, wobei die Abdeckgruppe (30) einen leitenden Teil (31) und eine obere Abdeckung (32) umfasst, wobei die obere Abdeckung (32) in isolierter Verbindung mit dem leitenden Teil (31) ist, der leitende Teil (31) einen Abflachungsabschnitt (311) und einen Buckelabschnitt (312) umfasst, wobei der Buckelabschnitt (312) mit dem Abflachungsabschnitt (311) verbunden ist, eine Mitte der oberen Abdeckung (32) mit einem Durchgangsloch (321) bereitgestellt ist und der Buckelabschnitt (312) sich in das Durchgangsloch (321) erstreckt;
einen Zellkörper (20), der in der haltenden Ausnehmung (11) untergebracht ist, wobei der Zellkörper (20) mit einem ersten Streifen (40) und einem zweiten Streifen (50) verbunden ist, der erste Streifen (40) mit dem leitenden Teil (31) verbunden ist und der zweite Streifen (50) mit dem Gehäuse (10) verbunden ist;
wobei eine versiegelte Verbindung zwischen der oberen Abdeckung (32) und dem Gehäuse (10) durch Verschweißen realisiert ist;
wobei der erste Streifen (40) mit dem Abflachungsabschnitt (311) durch Laser-Verschweißen verbunden ist und ein Schweißpunkt (60) zum Laser-Verschweißen an einer Mitte des Abflachungsabschnitts (311) angeordnet ist;
**dadurch gekennzeichnet, dass**
die Bodenwand (12) mit einem Flüssigkeitseinspritz-Loch (121) bereitgestellt ist, das mit der haltenden Ausnehmung (11) in Verbindung steht, ein unteres Ende der Bodenwand (12) weiterhin mit einem Versiegelungsstück (14) bereitgestellt ist und das Versiegelungsstück (14) in versiegelter Verbindung mit dem Flüssigkeitseinspritz-Loch (121) ist.

2. Batterie nach Anspruch 1, wobei eine Fläche der oberen Abdeckung (32), die von dem leitenden Teil (31) abgewandt ist, eine erste Fläche (323) ist, eine Fläche der oberen Abdeckung (32), die dem leitenden Teil (31) zugewandt ist, eine zweite Fläche (324) ist, eine Kante der zweiten Fläche (324) mit einer Stufe (322) bereitgestellt ist und die Stufe (322) von der zweiten Fläche (324) zur ersten Fläche (323) zurückgesetzt ist; ein oberes Ende der Seitenwand (13) mit einer Öffnung (131) bereitgestellt ist und eine obere Wand der Stufe (322) gegen das obere Ende der Seitenwand (13) angrenzt.

3. Batterie nach Anspruch 2, wobei die Stufe (322) die Kante der zweiten Fläche (324) einkreist; die Stufe (322) von der zweiten Fläche (324) zur ersten Fläche (323) mit einer Tiefe H1 in einem Bereich von 0,05 mm bis 0,15 mm zurückgesetzt ist; und/oder
eine Entfernung D zwischen einer Innenwand der Stufe (322) und einer Kante der ersten Fläche (323) von 0,1 mm bis 0,2 mm reicht.

4. Batterie nach Anspruch 3, wobei eine Dicke T der Abdeckung (32) von 0,1 mm bis 0,2 mm reicht; und/oder
ein Durchmesser des Abflachungsabschnitts (311) kleiner ist als ein Durchmesser der zweiten Fläche (324) der oberen Abdeckung (32).

5. Batterie nach irgendeinem der Ansprüche 1-4, wobei ein Innendurchmesser des Durchgangslochs (321) größer ist als ein Durchmesser des Buckelabschnitts (312) und der Innendurchmesser des Durchgangslochs (321) kleiner ist als ein Durchmesser des Abflachungsabschnitts (311).

6. Batterie nach irgendeinem der Ansprüche 2-4, wobei ein oberes Ende des Buckelabschnitts (312) bündig mit der ersten Fläche (323) abschließt; oder das obere Ende des Buckelabschnitts (312) niedriger ist als die erste Fläche (323).

7. Batterie nach irgendeinem der Ansprüche 1-4, wobei der erste Streifen (40) mit dem Abflachungsabschnitt (311) verbunden ist und der zweite Streifen (50) mit der Bodenwand (12) des Gehäuses (10) verbunden ist.

8. Batterie nach irgendeinem der Ansprüche 1-4, wobei ein Ende des ersten Streifens (40) mit dem Zellkörper (20) verbunden ist und das andere Ende des ersten Streifens (40) sich zur Außenseite des Zellkörpers (20) erstreckt; wobei sich das Ende des ersten Streifens (40), das sich zur Außenseite des Zellkörpers (20) erstreckt, mit einer begrenzenden Kante (41) bereitgestellt ist und die begrenzende Kante (41) am nächsten an einer Kante des leitenden Teils (31) ist; eine Entfernung H2 zwischen der begrenzenden Kante (41) und der Kante des leitenden Teils (31) kleiner ist als eine Entfernung H3 zwischen der begrenzenden Kante (41) und einer Mitte des Schweißpunktes (60), der zum Laser-Verschweißen verwendet ist.

9. Batterie nach irgendeinem der Ansprüche 1-4, wobei die obere Abdeckung (32) eine obere Edelstahlabdeckung ist; die obere Abdeckung (32) mit einer Nickelschicht mit einer Dicke von 0,5 µm bis 5 µm plattiert ist; und/oder
die obere Abdeckung (32) in isolierter Verbindung mit dem leitenden Teil (31) durch einen isolierenden Teil (33) ist.

10. Elektronisches Produkt, umfassend die Batterie nach irgendeinem der Ansprüche 1-9.

## Revendications

1. Batterie, comprenant :
un boîtier (10) comportant une paroi inférieure (12) et une paroi latérale (13), dans laquelle une extrémité inférieure de la paroi latérale (13) est connectée à un bord de la paroi inférieure (12), et la paroi inférieure (12) et la paroi latérale (13) forment une cavité de logement (11) ;
un ensemble de couvercle (30) disposé sur le boîtier (10), dans laquelle l'ensemble de couvercle (30) comprend une partie conductrice (31) et un couvercle supérieur (32), le couvercle supérieur (32) est en connexion isolée avec la partie conductrice (31), la partie conductrice (31) comprend une portion aplatie (311) et une portion de bossage (312), la portion de bossage (312) est connectée à la portion aplatie (311), un centre du couvercle supérieur (32) est pourvu d'un trou traversant (321), et la portion de bossage (312) s'étend dans le trou traversant (321) ;
un corps de cellule (20) agencé dans la cavité de logement (11), dans laquelle le corps de cellule (20) est connecté à une première patte (40) et à une deuxième patte (50), la première patte (40) est connectée à la partie conductrice (31) et la deuxième patte (50) est connectée au boîtier (10) ;
dans laquelle une connexion étanche entre le couvercle supérieur (32) et le boîtier (10) est réalisée par soudage ;
dans laquelle la première patte (40) est connectée à la portion aplatie (311) par soudage laser, et un point de soudage (60) pour le soudage laser est situé au centre de la portion aplatie (311) ;
**caractérisée en ce que** la paroi inférieure (12) est pourvue d'un trou d'injection de liquide (121) communiquant avec la cavité de logement (11), une extrémité inférieure de la paroi inférieure (12) est en outre pourvue d'une pièce d'étanchéité (14), et la pièce d'étanchéité (14) est en connexion étanche avec le trou d'injection de liquide (121).

2. Batterie selon la revendication 1, dans laquelle une surface du couvercle supérieur (32) opposée à la partie conductrice (31) est une première surface (323), une surface du couvercle supérieur (32) opposée à la partie conductrice (31) est une deuxième surface (324), un bord de la deuxième surface (324) est pourvu d'un rebord (322), et le rebord (322) est en retrait de la deuxième surface (324) vers la première surface (323) ; une extrémité supérieure de la paroi latérale (13) est pourvue d'une ouverture (131), et une paroi supérieure du rebord (322) vient à butée contre l'extrémité supérieure de la paroi latérale (13).

3. Batterie selon la revendication 2, dans laquelle le rebord (322) encercle le bord de la deuxième surface (324) ; le rebord (322) est en retrait de la deuxième surface (324) vers la première surface (323) à une profondeur H1 comprise dans une plage de 0,05 mm à 0,15 mm ; et/ou
la distance D entre une paroi interne du rebord (322) et un bord de la première surface (323) est comprise entre 0,1 mm et 0,2 mm.

4. Batterie selon la revendication 3, dans laquelle l'épaisseur T du couvercle (32) est comprise entre 0,1 mm et 0,2 mm ; et/ou
le diamètre de la portion aplatie (311) est inférieur au diamètre de la deuxième surface (324) du couvercle supérieur (32).

5. Batterie selon l'une quelconque des revendications 1 à 4, dans laquelle le diamètre interne du trou traversant (321) est supérieur au diamètre de la portion de bossage (312), et le diamètre interne du trou traversant (321) est inférieur au diamètre de la portion aplatie (311).

6. Batterie selon l'une quelconque des revendications 2 à 4, dans laquelle une extrémité supérieure de la portion de bossage (312) affleure avec la première surface (323) ; ou l'extrémité supérieure de la portion de bossage (312) est plus basse que la première surface (323).

7. Batterie selon l'une quelconque des revendications 1 à 4, dans laquelle la première patte (40) est connectée à la portion aplatie (311), et la deuxième patte (50) est connectée à la paroi inférieure (12) du boîtier (10).

8. Batterie selon l'une quelconque des revendications 1 à 4, dans laquelle une extrémité de la première patte (40) est connectée au corps de cellule (20), et l'autre extrémité de la première patte (40) s'étend vers l'extérieur du corps de cellule (20) ; l'extrémité de la première patte (40) s'étendant vers l'extérieur du corps de cellule (20) est pourvue d'un bord de délimitation (41), et le bord de délimitation (41) est le plus proche d'un bord de la partie conductrice (31) ; la distance H2 entre le bord de délimitation (41) et le bord de la partie conductrice (31) est inférieure à la distance H3 entre le bord de délimitation (41) et le centre du point de soudage (60) utilisé pour le soudage laser.

9. Batterie selon l'une quelconque des revendications 1 à 4, dans laquelle le couvercle supérieur (32) est un couvercle supérieur en acier inoxydable ; le couvercle supérieur (32) est plaqué d'une couche de nickel d'une épaisseur de 0,5 µm à 5 µm ; et/ou
le couvercle supérieur (32) est en connexion isolée avec la partie conductrice (31) via une partie isolante (33).

10. Produit électronique comprenant la batterie selon l'une quelconque des revendications 1 à 9.
